# EUROPEAN PATENT APPLICATION

(11) **EP 4 005 860 A1**
(43) Date of publication of application: **01.06.2022**
(21) Application number: 21210222.2
(22) Date of filing: 24.11.2021
(51) Int. Cl.: B60L 53/63, B60L 53/67, H02J 3/26

(54) **SYSTEM AND METHOD FOR DYNAMIC PHASE LOAD BALANCING FOR ELECTRIC VEHICLE CHARGERS**

(30) Priority: 26.11.2020 GB 202018604
(71) Applicant: Zeta Specialist Lighting Limited, Bicester Oxfordshire OX26 4LD (GB)
(72) Inventor: SHADBOLT, Philip David, Thornborough, Buckinhamshire MK18 2DF (GB)
(74) Representative: Windsor, Louise

(57) **Abstract**

An electric vehicle charging system (1) for connecting one or more electric vehicles (9) to a three-phase power network comprising a plurality of charging terminals (3) wherein each charging terminal comprises a charging socket (5) connectable to output power to an electric vehicle; an input for connecting the charging terminal to the power network; a control device comprising a phase selector to select the phase of the input from the power network for the or each charging terminal; and three four-pole contactors for power switching between the phases of the power network to input power to the charging terminal from the selected phase of the power network.

## Description

The present invention relates to an improved system and method for phase load balancing for electric vehicle (EV) chargers.

Three-phase electric power is a common method of alternating current (AC) power generation, transmission and distribution and is the most common method used by electric grids to transfer power.

The growth in popularity and production of electric vehicles has made charging efficiency and safety very important. A significant proportion of electric vehicles currently on the market only draw power from a single phase, such that the vehicle is always wired to take power from a single phase of a vehicle charging socket. This allows any single-phase electric vehicle to charge from a domestic single-phase charger. However, as electric vehicle technology progresses, more sophisticated electric vehicles are configured to draw power from all three phases, which reduces the charging time.

Following the increased use of electric vehicles, it is becoming more common for multiple chargers to be provided in the same location, for example, in a car park or at a service station. Thus, it is advantageous for an array of chargers to control and manage which phase a particular electric vehicle is supplied from. Existing systems have proposed that each charger could be configured at manufacture to use a different phase so that there is a balance of electrical supply. However, fixing the phase at the charger does not allow for balance across multiple chargers because it cannot be predicted which of the chargers in an array will be in use at any one time. For example, if three electric vehicles are each connected to a charger in an array of chargers installed in a car park, it is possible that all three vehicles connect to a charger supplied from the same phase and none of the vehicles connect to a charger supplied from the further two possible phases. This results in an unbalanced system because there is a high current draw from one phase and no current draw from the other two phases.

Existing methods that propose solutions for phase load balancing do not address the problem of hazardous cross connection of the three phases nor do they allow for changes in the phase balance as the connection of electric vehicles changes across an array. For example, in a busy array, electric vehicles will charge for different periods of time and have different charging requirements.

Proposed solutions include software only solutions, which detect when a connected electric vehicle reduces its current draw due to its battery becoming nearly fully charged. The charger will then use the communication between the vehicle and the charger (pilot line) to reduce the current draw to other connected vehicles to maintain balance. However, by reducing power supplied to all connected vehicles, the charging times to all vehicles will be longer. Existing software solutions are configured to divide the available power over the plurality of electric vehicles to balance power but charge at a lower speed, or to charge each connected electric vehicle alternately. The proposed solutions increase the time required to charge electric vehicles.

There is a need for a safe and efficient system and method for charging a plurality of electrical vehicles at a charging array. It is, therefore, an object of the present invention to seek to alleviate the above identified problems.

According to one aspect of the present invention, there is provided an electric vehicle charging system for connecting one or more electric vehicles to a three-phase power network comprising:
a plurality of charging terminals wherein each charging terminal comprises:
a charging socket connectable to output power to an electric vehicle;
an input for connecting the charging terminal to the power network;
a control device comprising a phase selector to select the phase of the input from the power network for the or each charging terminal; and three four-pole contactors for power switching between the phases of the power network to input power to the charging terminal from the selected phase of the power network.

Preferably, each charging terminal comprises three four-pole contactors that are cross coupled to allow only one contactor to be switched on at any time.

The system of the present invention ensures that each phase of a three-phase power network is used in the most efficient way. Thus, the total power delivered by the present invention is greater than the total power deliverable without the control device and re-routing capability of the present invention. The present invention physically switches, i.e. re-routes the phase of the power supplied to the terminals and to each of the plurality of connected electric vehicles so that maximum power is delivered to all vehicles that are connected. Sharing the power from all phases of the power supply results in a more efficient use of the power distribution network capacity and cable ratings.

Preferably, the system further comprises a safety interlock.

Preferably, the safety interlock comprises a safety relay circuit.

Preferably, the safety relay circuit comprises at least three relays configured such that turning on any one relay automatically breaks the circuit path to the other two relays.

Preferably, each relay comprises two sets of contacts that are normally closed and one set of normally open contacts when the relay is turned off.

Preferably, the control device further comprises a processor connected to a decoder wherein if the decoder detects that more than one input connecting the charging terminal to a phase of the multiple phase power network is turned on then the input for connecting the charging terminal to the power network is switched off.

Preferably, the decoder is a 3-to-8 decoder.

Preferably, the electric vehicle charging system is configured such that no power can possibly flow whilst a contactor is opening or closing, and/or during connection and/or during re-routing of the phase distribution.

The system of the present invention significantly reduces the risk of deterioration and potential failure of the contactor is significantly reduced.

Preferably, the electric vehicle charging system is configured such that it is not possible to energise more than one contactor at any one time.

It is an advantage of the arrangement of the system that, if more than one input signal is detected by the control device, then the system ensures that the output which is turned on is not connected to any of the contactors and no power will flow, thus ensuring any re-routing between phases is achieved safely without any risk that the charging terminal could be simultaneously connected to more than one phase of the multiple phase power network.

Preferably, the control device comprises a power detector to detect power and phase usage at the charging terminal.

Preferably, the power detector detects connection of an electric vehicle to the charging terminal.

Preferably, the control device measures charging level and power storage capacity of the electric vehicle connected to the charging terminal.

Preferably, each charging terminal comprises a user interface.

Preferably, each charging terminal comprises a display.

Preferably, each charging terminal comprises a visual indicator; preferably, wherein the visual indicator displays to a user an indication of charging level and/or charging speed and/or charging status of an electrical vehicle connected to the electrical vehicle charging terminals

In a further aspect, the present invention provides a dynamic phase balancing method for managing power supplied from a three-phase power network to a plurality of electrical vehicle charging terminals comprising the steps of:
i) detecting connection of an electric vehicle to any one or more of the electrical vehicle charging terminals;
ii) measuring power and phase usage at each charging terminal;
iii) detecting a higher power load on one of the phases compared to the other phases;
iv) switching the phase of power supplied to at least one charging terminal to balance phase usage across the plurality of electrical vehicle charging terminals.

The method of the present invention ensures that each phase of a three-phase power network is used in the most efficient way. The method switches the phase of the power supplied and balances the power from all phases of the power supply to result in a more efficient use of the distribution network capacity and cable ratings.

Preferably, the dynamic phase balancing method further comprises a step of disconnecting a selected charging terminal before switching the phase of power supplied to the selected charging terminal and re-connecting the power supplied to switch the phase of power supplied to the selected charging terminal.

Preferably, on detecting a higher power load on one of the phases compared to the other phases the charging terminal that is selected for phase switching is automatically disconnected.

The method of the present invention ensures that no power can possibly flow whilst a contactor is opening or closing, during connection or re-routing of the phase distribution. Thus, the risk of deterioration and potential failure of the contactor is significantly reduced

Preferably, the method comprises measuring power and phase usage at each charging terminal at pre-determined time intervals.

Preferably, the pre-determined time interval is between about 30-90 seconds; more preferably, the pre-determined time interval is about 60 seconds; optionally, the pre-determined time interval is less than about 30 seconds.

Within this specification, the term "about" means plus or minus 20%, more preferably plus or minus 10%, even more preferably plus or minus 5%, most preferably plus or minus 2%.

Preferably, the method comprises detecting a higher power load on one of the phases compared to the other phases wherein the difference in power load is greater than a predetermined threshold.

Optionally, the method comprises detecting a lower power load on one of the phases compared to the other phases wherein the difference in power load is greater than a predetermined threshold.

Preferably, the pre-determined threshold is a difference of between about 5 and 15kw; more preferably, between about 7 and 12 kw.

Within this specification, the term "about" means plus or minus 20%, more preferably plus or minus 10%, even more preferably plus or minus 5%, most preferably plus or minus 2%.

Preferably, the method further comprises a step of authenticating user details after detecting connection of an electric vehicle to any one or more of the electrical vehicle charging terminals.

Preferably, the method further comprises a step of displaying at least one indicator.

Preferably, the or each indicator relates to charging level and/or charging speed and/or charging status of an electrical vehicle connected to the electrical vehicle charging terminals.

In a further aspect, the present invention provides a computer program comprising instructions which, when the program is executed by a computer, cause the computer to carry out the dynamic phase balancing method for managing power supplied from a multiple phase power network to a plurality of electrical vehicle charging terminals.

### DETAILED DESCRIPTION

Example embodiments of the present invention will now be described with reference to the accompanying Figures, in which:
Figures 1A, 1B and 1C show an array of three chargers having three separate four-pole contactors (switches) in accordance with a preferred embodiment of the present invention;
Figure 2A and Figure 2B show an example scenario for the phase balancing system of the present invention when the distribution of load across the phases change;
Figure 3 shows an example of the processor for control of the connectors of the phase balancing system of the present invention; and;
Figure 4A and Figure 4B show the safety relays used to control the contactors of the phase balancing system of the present invention.

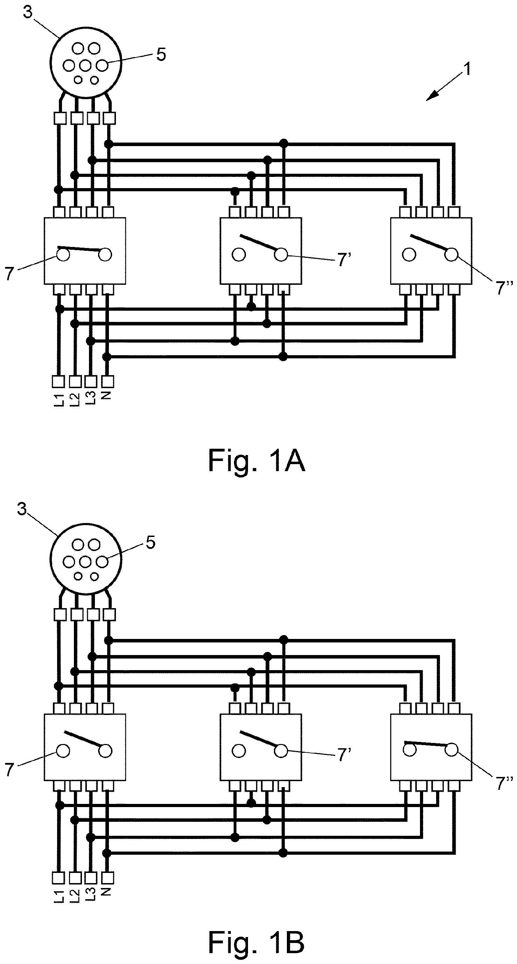

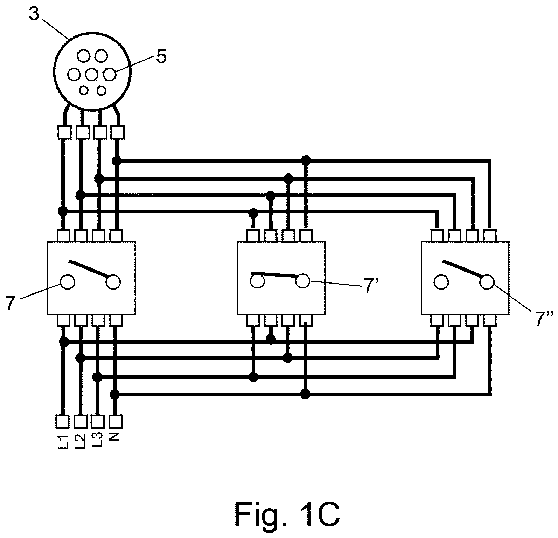

Referring to Figure 1A, 1B and 1C, a charging terminal or charger 3 for electric vehicles (EV) is shown, which is used in the dynamic phase load balancing system 1 of the present invention. The charger 3 is connected to a three-phase (L1, L2, L3) electrical supply to allow for either single or three-phase charging. The charger 3 comprises an electric vehicle (EV) charging socket 5 having a charging cable (not shown) and vehicle connector (not shown) to which an electric vehicle (not shown) is removably connected to be charged when the EV is connected to the charging terminal 3.

Referring to Figures 1A, 1B and 1C, a preferred embodiment of the present invention is shown, wherein the phase L1, L2, L3 of the electrical supply that is used to charge, is controlled.

Referring to Figures 1A, 1B and 1C, in use, an EV connected to a charging terminal 3 can be a single-phase or a three-phase vehicle. When a user connects their vehicle to the charger 3 using the charging cable (not shown), the system detects whether authorisation has been granted to use the charger 3 and which of the three phases L1, L2, L3 will be used for charging of the EV.

Referring to Figure 1A, if a first switch 7 is closed/on then power is supplied using phase L1 and the remaining switches are open/off. Referring to Figure 1B, if a second switch 7" is closed/on then power is supplied using phase L2 and the remaining switches are open/off. Referring to Figure 1C, if a third switch 7' is closed then power is supplied using phase L3 and the remaining switches are open/off.

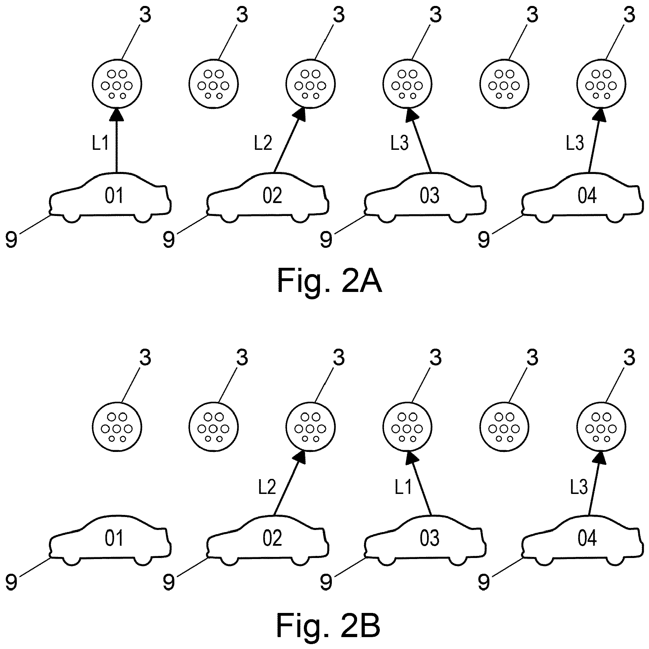

The dynamic phase load balancing system 1 comprises a "pilot line" signal that allows communication between the charger 3 and the EV 9. For example, as shown in Figures 2A and 2B, when a charger 3 is part of an array of chargers situated in a car park or service station, one of the chargers 3 is designated to be the master charger and the remaining chargers within the array are designated to be slave chargers. The master charger monitors the power usage and distribution of phases L1, L2, L3 that are in use within the array to control which phase each charger 3 uses. Each charger 3 within the array automatically records the phase that they are using and the power usage to report back to the master charger at predetermined time intervals. For example, power balance is measured by recording and reporting the current every second.

The system decides within the charging terminal 3 which phase L1, L2 L3 of the power supply is used based on detection and control of which phase all other chargers with the array of chargers are using. Each charger comprises a contactor having a switch 7.

Within an array of chargers, the number and requirements of the connected EVs changes, which requires dynamic changes to the selected phase L1, L2, L3 used for charging. Referring to Figure 2A, an example scenario for the phase balancing system and method of the present invention is shown. The system 1 comprises an array of six charging terminals or chargers 3 and four electric vehicles 9 each connected to a charger 3. A first EV 9 is connected to a first phase L1 of the electrical supply. A second EV 9 is connected to a second phase L2 of the electrical supply. A third and fourth EV 9 are connected to a third phase L3 of the electrical supply. Referring to Figure 2B, when the first EV 9, connected to the first phase L1 is fully charged, the system detects an uneven distribution of load across the phases L1, L2, L3. Thus, the system automatically switches off connection of an EV 9 connected to the third phase, L3 and connects the charger connected to this vehicle 9 to the first phase L1.

The system performs phase switching to re-distribute the load over the three phases L1, L2, L3 of the array. It is understood that in the array of chargers of the present invention, the phase distribution is changed constantly according to the number of EV vehicles that are connected and their respective power requirements. For example, the system takes account of the state of charge of each EV connected to the array and power requirements according to the model of the EV that is connected. The dynamic phase balancing achieved by the present invention is configured so that it is likely that phase changes will happen multiple times during a charging session so that the aggregated load is always as balanced as possible. The thresholds that allow the system to detect a phase imbalance are configured so that phase balancing is achieved without requiring constant phase switching. Phase balancing is achieved by rotating phases and adjusting the pilot line signal to optimise the balance to the district network operator.

The method of redistribution is shown in Figure 2A and Figure 2B in respect of a connected EV reaching maximum charge. The method of phase balancing is also triggered when it is detected that connection of a new EV has caused an uneven phase distribution. In both instances, when a phase imbalance is detected, the master charger sends a message to a slave charger that has been selected to change phase and that charger is switched off to stop taking power. The charger then monitors the supply of power to that connected EV vehicle to detect when the power delivered to the EV reaches zero. The current contactor is then switched off and the charger is disconnected from the power supply. The system then determines the new designated phase for the charger to achieve even phase distribution. The charger is then energised to switch the contactor to deliver power using the desired new phase supplied to the charging cable and to the EV. The configuration of the present invention ensures that no power can possibly flow whilst a contactor is opening or closing, which avoids deterioration and potential failure of the contactor.

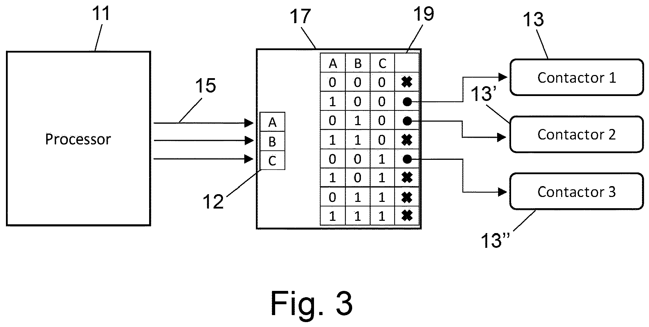

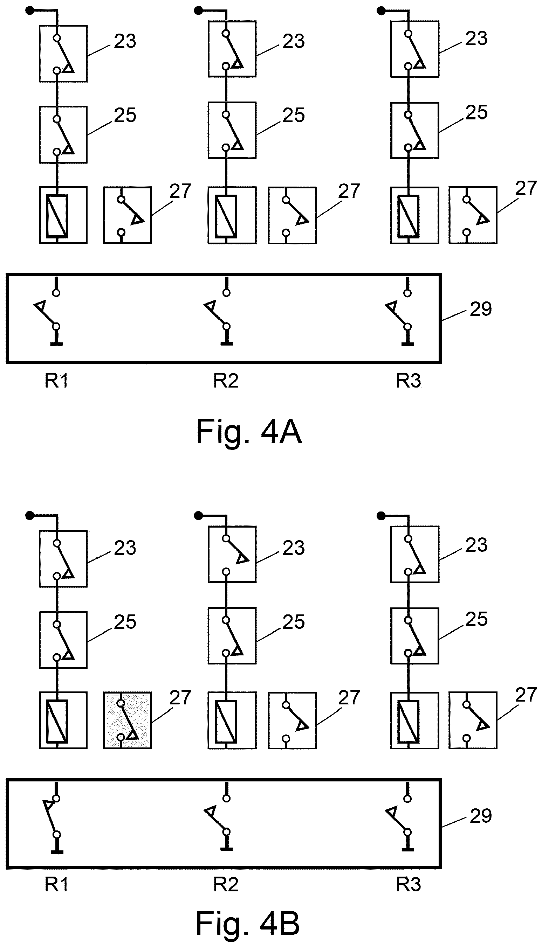

Referring to Figure 3, the system of the present invention also comprises a hardware interlock, which ensures that it is not possible to energise and communicate with more than one contactor at any one time. A processor 11 uses three logic signals A, B, C to select the required one of the three contactors 13, 13', 13". The processor signal lines 15 are connected to a 3-to-8 decoder 17. As shown in Figure 3, the input 12 at A, B, C determines the output 19 to the contactor 13, 13', 13" that is turned on. If more than one input 12 (A, B, C) is turned on then it is not possible for the output 19 to connect to any of the contactors 13, 13', 13". Thus, the logic decoder circuit of the present invention ensures that any attempt to energise more than one relay, described with respect to Figures 4A and 4B is prevented.

Referring to Figures 4A and Figure 4B, the system further comprises a safety interlock system comprising a controlled safety relay system connected to an electronic software control 29, which is driven by the hardware interlock described with reference to Figure 3. The safety interlock system is configured so that if any contact connected to the contactors is unable to change state then none of the contactors will be able to change state. This avoids the risk of errors when both contacts should be turned off, but one contact is turned on and only a second contact turned off.

Referring to Figures 1A, 1B, 1C, 4A and 4B each contactor is controlled by one relay; for example, first phase L1 is controlled by a first relay R1; second phase L2 is controlled by a second relay R2 and third phase L3 is controlled by a third relay R3.

Each relay R1, R2, R3 comprises:
- two sets of contacts 23, 25 that are normally closed when the relay R1, R2, R3 is turned off; and
- one set of contacts 27 that are normally open when the relay R1, R2, R3 is turned off.

A logic decoder circuit energises one of the three intermediate relays so that any attempt by the system to energise more than one relay is prevented.

Figure 4A shows an example with all relays R1, R2, R3 off and Figure 4B shows an example with a first relay R1 turned on, which prevents the second and third relays (R2, R3) from turning on.

Turning on any relay R1, R2, R3 automatically breaks the circuit path to the other two relays, preventing them from turning on. This prevents cross connection, which is potentially hazardous. That is, the engagement of any relay R1, R2, R3 automatically prevents engagement of the other two relays. The normally open contacts are used to apply power to turn on the selected contactor.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

Within this specification, the term "one or each", preferably means at least one, preferably each.

The above described embodiments have been given by way of example only, and the skilled reader will naturally appreciate that variations could be made thereto without departing from the scope of the claims. Such changes and modifications can be made without departing from the scope of the present invention and without diminishing its attendant advantages. It is therefore intended that such changes and modifications are covered by the appended claims.

## Claims

1. An electric vehicle charging system for connecting one or more electric vehicles to a three-phase power network comprising:
a plurality of charging terminals wherein each charging terminal comprises:
a charging socket connectable to output power to an electric vehicle;
an input for connecting the charging terminal to the power network;
a control device comprising a phase selector to select the phase of the input from the power network for the or each charging terminal; and
three four-pole contactors for power switching between the phases of the power network to input power to the charging terminal from the selected phase of the power network.

2. An electric vehicle charging system according to claim 1 wherein each charging terminal comprises three four-pole contactors that are cross coupled to allow only one contactor to be switched on at any time.

3. An electric vehicle charging system according to claim 1 or claim 2, wherein the system further comprises a safety interlock.

4. An electric vehicle charging system according to claim 3, wherein the safety interlock comprises a safety relay circuit.

5. An electric vehicle charging system according to claim 4, wherein the safety relay circuit comprises at least three relays configured such that turning on any one relay automatically breaks the circuit path to the other two relays; preferably, wherein each relay comprises two sets of contacts that are normally closed and one set of normally open contacts when the relay is turned off.

6. An electric vehicle charging system according any preceding claim, wherein:
a) the control device further comprises a processor connected to a decoder wherein if the decoder detects that more than one input connecting the charging terminal to a phase of the multiple phase power network is turned on then the input for connecting the charging terminal to the power network is switched off; preferably, wherein the decoder is a 3-to-8 decoder; and/or
b) the electric vehicle charging system is configured such that no power can possibly flow whilst a contactor is opening or closing, and/or during connection and/or during re-routing of the phase distribution; and/or
c) the electric vehicle charging system is configured such that it is not possible to energise more than one contactor at any one time; and/or
d) the control device comprises a power detector to detect power and phase usage at the charging terminal; preferably, wherein the power detector detects connection of an electric vehicle to the charging terminal; and/or
e) the control device measures charging level and power storage capacity of the electric vehicle connected to the charging terminal; and/or
f) each charging terminal comprises a user interface; and/or
g) each charging terminal comprises a display; and/or
h) each charging terminal comprises a visual indicator; preferably, wherein the visual indicator displays to a user an indication of charging level and/or charging speed and/or charging status of an electrical vehicle connected to the electrical vehicle charging terminals

7. A dynamic phase balancing method for managing power supplied from a three-phase power network to a plurality of electrical vehicle charging terminals comprising the steps of:
i) detecting connection of an electric vehicle to any one or more of the electrical vehicle charging terminals;
ii) measuring power and phase usage at each charging terminal;
iii) detecting a higher power load on one of the phases compared to the other phases;
iv) switching the phase of power supplied to at least one charging terminal to balance phase usage across the plurality of electrical vehicle charging terminals.

8. A dynamic phase balancing method according to claim 7 further comprising a step of disconnecting a selected charging terminal before switching the phase of power supplied to the selected charging terminal and re-connecting the power supplied to switch the phase of power supplied to the selected charging terminal.

9. A dynamic phase balancing method according to claim 7 or claim 8, wherein on detecting a higher power load on one of the phases compared to the other phases the charging terminal that is selected for phase switching is automatically disconnected.

10. A dynamic phase balancing method according to any of claims 7 to 9 wherein measuring power and phase usage at each charging terminal is carried out at pre-determined time intervals.

11. A dynamic phase balancing method according to any of claims 7 to 10 comprising detecting a higher power load on one of the phases compared to the other phases wherein the difference in power load is greater than a predetermined threshold.

12. A dynamic phase balancing method according to any of claims 7 to 10 comprising detecting a lower power load on one of the phases compared to the other phases wherein the difference in power load is greater than a predetermined threshold.

13. A dynamic phase balancing method according to claim 11 or claim 12 wherein the pre-determined threshold is a difference of between about 7 and 12 kw.

14. A dynamic phase balancing method according to any of claims 7 to 13 further comprising a step of authenticating user details after detecting connection of an electric vehicle to any one or more of the electrical vehicle charging terminals.

15. A dynamic phase balancing method according to any of claims 7 to 14 further comprising a step of displaying at least one indicator.
